(19) Europäisches Patentamt
European Patent Office
Office européen des brevets

(11) **EP 4 172 648 B1**

(12) **FASCICULE DE BREVET EUROPEEN**

(45) Date de publication et mention de la délivrance du brevet:
**07.08.2024 Bulletin 2024/32**

(21) Numéro de dépôt: **21731189.3**

(22) Date de dépôt: **11.06.2021**

(51) Classification Internationale des Brevets (IPC):
**G01S 7/48** *(2006.01)* **G01P 5/00** *(2006.01)*
**G01P 5/26** *(2006.01)* **G01S 17/58** *(2006.01)*
**G01S 17/95** *(2006.01)*

(52) Classification Coopérative des Brevets (CPC):
**G01S 17/95; G01P 5/26; G01S 7/4808;
G01S 17/58;** Y02A 90/10

(86) Numéro de dépôt international:
**PCT/EP2021/065839**

(87) Numéro de publication internationale:
**WO 2022/002563 (06.01.2022 Gazette 2022/01)**

(54) **PROCEDE DE DETERMINATION DES COMPOSANTES DE LA VITESSE DU VENT AU MOYEN D'UN CAPTEUR DE TELEDETECTION PAR LASER ET AU MOYEN D'UNE COHERENCE TEMPORELLE**

VERFAHREN ZUR BESTIMMUNG VON WINDGESCHWINDIGKEITSKOMPONENTEN MITTELS EINES LASER-FERNSENSORS UND MITTELS EINER ZEITLICHEN KOHÄRENZ

METHOD FOR DETERMINING WIND VELOCITY COMPONENTS BY MEANS OF A LASER REMOTE SENSOR AND BY MEANS OF A TEMPORAL COHERENCE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **29.06.2020 FR 2006816**

(43) Date de publication de la demande:
**03.05.2023 Bulletin 2023/18**

(73) Titulaire: **IFP Energies nouvelles
92500 Rueil-Malmaison (FR)**

(72) Inventeurs:
• **GUILLEMIN, Fabrice
92852 RUEIL-MALMAISON CEDEX (FR)**
• **SABIRON, Guillaume
92852 RUEIL-MALMAISON CEDEX (FR)**
• **GOUSSAULT, Romain
92852 RUEIL-MALMAISON CEDEX (FR)**

(74) Mandataire: **IFP Energies nouvelles
Département Propriété Industrielle
Rond Point de l'échangeur de Solaize
BP3
69360 Solaize (FR)**

(56) Documents cités:
**US-A1- 2011 106 324     US-A1- 2019 293 836**

• **HYUN-GOO KIM ET AL: "Correction of LiDAR measurement error in complex terrain by CFD: Case study of the Yangyang pumped storage plant", WIND ENGINEERING., vol. 41, no. 4, 1 August 2017 (2017-08-01), GB, pages 226 - 234, XP055547081, ISSN: 0309-524X, DOI: 10.1177/0309524X17709725**
• **MATTHIEU BOQUET ET AL: "Combination of Wind Lidar with CFD tools for improving measurements in complex terrain", 1 March 2010 (2010-03-01), pages 1 - 4, XP055546981, Retrieved from the Internet <URL:https://www.researchgate.net/profile/Remy_Parmentier/publication/268291799_Combination_of_Wind_Lidar_with_CFD_tools_for_improving_measurements_in_complex_terrain/links/568bb46f08aebccc4e1c0533/Combination-of-Wind-Lidar-with-CFD-tools-for-improving-measurements-in-complex-terrain.pdf> [retrieved on 20190124], DOI: 10.1127/metz/2015/0637**

EP 4 172 648 B1

**Description**

**Domaine technique**

La présente invention concerne le domaine de la détermination des composantes de la vitesse du vent, notamment dans le but d'évaluer l'opportunité d'installer une éolienne sur un site (un emplacement).

Avant l'installation d'une éolienne, ou d'une ferme d'éolienne, il est nécessaire d'évaluer le potentiel du vent sur ce site. En effet, la taille de l'éolienne, sa classe et sa structure dépendent de caractéristiques du vent, telles que la vitesse moyenne du vent, la vitesse maximale du vent, l'intensité de la turbulence du vent (qui correspond au rapport de l'écart-type de la vitesse du vent sur la vitesse moyenne du vent), etc. Par exemple, la taille de l'éolienne peut être choisie en fonction de la répartition de la valeur moyenne du vent, et la classe de l'éolienne peut être choisie en fonction de l'intensité de la turbulence. Etant donné que le changement d'une classe d'éolienne à une autre a un coût significatif, il est important de bien connaître les caractéristiques du vent avant l'installation d'une éolienne.

De plus, cette détermination de composantes de la vitesse du vent est tout particulièrement critique puisqu'elle permet également de connaître la ressource productrice d'énergie. Ceci est important pour les projets éoliens, puisque cela conditionne également la fiabilité financière du projet d'installation d'éolienne.

**Technique antérieure**

Afin de réaliser ces mesures, la technique classique est l'installation d'un mât de mesure sur le site des mesures (qui est un site envisagé pour l'implémentation d'une éolienne). Un tel mât de mesure est équipé d'un nombre important de capteurs, et nécessite une installation spécifique ce qui implique un coût important, et n'est pas facile à déplacer d'un site à l'autre en raison de ces dimensions.

Selon une deuxième technique, on peut utiliser un capteur LiDAR (acronyme de l'expression en langue anglaise « light détection and ranging » pouvant être traduite par télédétection par Laser, de l'anglais «light amplification by stimulated émission of radiation »). Le LiDAR est une technologie de télédétection ou de mesure optique basée sur l'analyse des propriétés d'un faisceau renvoyé vers son émetteur. Cette méthode est utilisée notamment pour déterminer la distance à un objet au moyen d'un laser à impulsions. À la différence du radar basé sur un principe similaire, le capteur LiDAR utilise de la lumière visible ou infrarouge au lieu d'ondes radio.

Dans le domaine des éoliennes, le capteur LiDAR est annoncé comme étant un capteur indispensable au bon fonctionnement des grandes éoliennes, tout particulièrement alors que leur taille et leur puissance augmentent (aujourd'hui, 5 MW, bientôt 12 MW en offshore). Ce capteur permet la mesure à distance du vent, permettant dans un premier temps de calibrer les éoliennes pour qu'elles puissent fournir une puissance maximum (optimisation de la courbe de puissance). Pour cette étape de calibration, le capteur LiDAR peut être positionné au sol et orienté verticalement (profiler), ce qui permet de mesurer la vitesse de vent et sa direction, ainsi que le gradient de vent selon les altitudes. On peut appeler cette technique LIDAR posé.

Cette technique est décrite notamment dans les demandes de brevet EP3287810 et US2019293836.

Le principe de mesure des capteurs LiDARs se base sur une hypothèse d'homogénéité du vent à chaque altitude. En effet, les capteurs LiDARs sont composés de plusieurs faisceaux lasers avec des orientations différentes qui mesurent tour à tour la projection du vent sur les faisceaux à plusieurs altitudes.

Ces mesures radiales sont ensuite combinées afin de reconstruire une mesure de vent moyenne à chaque altitude, sous l'hypothèse que le vent instantané est identique en tout point de mesure par le capteur LiDAR.

Cette hypothèse est d'autant plus forte en présence d'un site complexe où les variations locales de vitesse du vent ont un impact important sur la précision de la mesure Lidar ainsi obtenue.

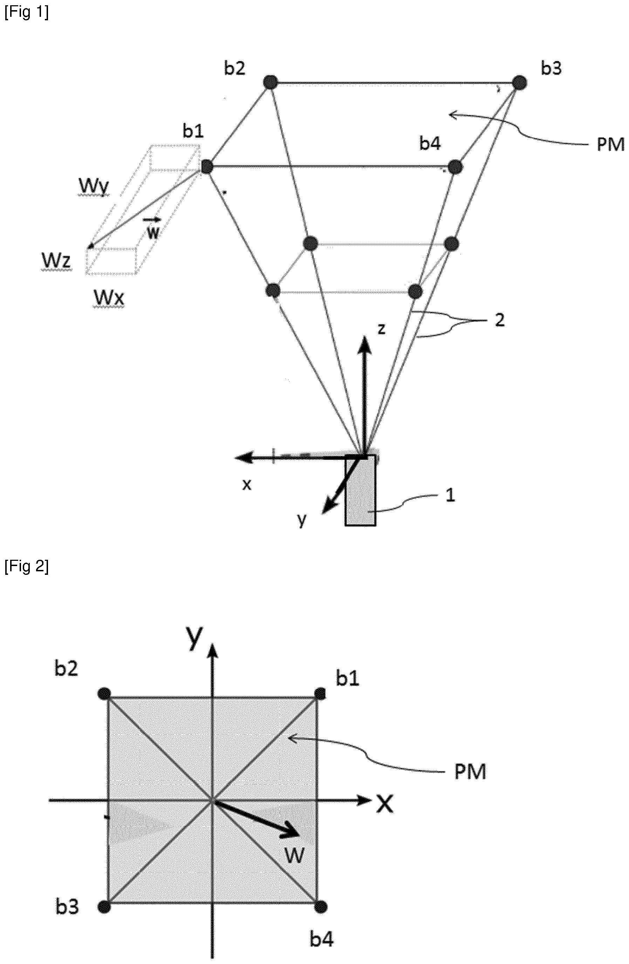

La figure 1 représente, de manière schématique et non limitative, un capteur LiDAR 1 posé et orienté verticalement pour la détermination des composantes de la vitesse du vent. Le capteur LiDAR 1 est utilisé pour obtenir au moins un signal de mesure sur au moins un plan de mesure PM (seulement deux plans de mesure sont représentés). Sur cette figure, sont représentés également les axes x, y et z. Le point de référence de ce repère est le centre du capteur LiDAR. La direction x est une direction horizontale. La direction y, perpendiculaire à la direction x, est une deuxième direction horizontale (les directions x, y forment un plan horizontal). La direction z est la direction verticale (correspondant à la direction de mesure du capteur LiDAR 1) dirigée vers le haut, l'axe z est perpendiculaire aux axes x et y. Les plans de mesure PM sont des plans formés par les directions x, y à une distance du capteur LiDAR 1 (pour une valeur de z non nulle). Les plans de mesure PM sont parallèles entre eux.

Comme visible à la figure 1, qui est un exemple de réalisation d'un capteur LiDAR pulsé, le capteur LiDAR 1 utilisé comporte quatre faisceaux ou axes de mesures 2. Les faisceaux de mesure 2 sont inclinés par rapport à l'axe vertical z. Le capteur LiDAR réalise une mesure ponctuelle en chaque point de mesure (b1, b2, b3, b4) qui sont des points d'intersection d'un plan de mesure PM et d'un faisceau 2. Ces points de mesure (b1, b2, b3, b4) sont représentés par des cercles noirs sur la figure 1.

Sur cette figure, est également représenté uniquement au point b1 le vecteur de la vitesse du vent W, et ces trois composantes Wx, Wy, Wz respectivement sur les axes x, y et z.

La figure 2 schématise, en vue de dessus, les points de mesure (b1, b2, b3, b4) dans le plan de mesure PM, situé à une altitude d'un capteur LiDAR avec 4 faisceaux. L'hypothèse qui est alors faite dans la méthode classique de mesure consiste à supposer qu'à un instant donné les trois composantes du vent aux points de mesures b1 à b4 sont égales, autrement dit, que le vent est homogène dans le carré grisé dont les sommets correspondent aux points de mesure (b1, b2, b3, b4).

Cette hypothèse d'homogénéité dans le plan de mesure n'est pas réaliste, d'autant plus que le plan de mesure est éloigné du capteur LiDAR posé. Par exemple, pour un capteur LiDAR avec quatre faisceaux tel qu'illustré en figures 1 et 2, pour un plan de mesure situé à 150m du capteur LiDAR, et pour une ouverture des faisceaux de mesure de 28°, la surface du carré limité par les points de mesure vaut 12700 m$^2$. Il semble évident que la vitesse du vent n'est pas homogène sur une telle surface. Ainsi, cette méthode de l'art antérieur ne permet pas de déterminer précisément les composantes de la vitesse du vent.

### Résumé de l'invention

La présente invention a pour but de déterminer les composantes de la vitesse du vent, de manière précise, robuste et fiable et de manière peu onéreuse. Pour cela, l'invention concerne un procédé de détermination des composantes de la vitesse du vent au moyen d'un capteur LiDAR posé. Pour ce procédé, on détermine la direction du vent et la vitesse moyenne du vent dans un plan de mesure, puis on construit une droite de projection perpendiculaire à la direction du vent dans le plan de mesure, on détermine ensuite un décalage temporel entre les points de mesure et la droite de projection, de manière à déterminer des signaux de mesure corrigés. Ces signaux de mesure corrigés permettent de déterminer les composantes de la vitesse du vent dans le plan de mesure.

L'invention concerne un procédé de détermination des composantes de la vitesse du vent au moyen d'un capteur LiDAR, ledit capteur LiDAR étant orienté sensiblement verticalement pour réaliser les mesures dans au moins un plan de mesure sensiblement horizontal, chaque plan de mesure comportant au moins deux points de mesure. Pour ce procédé, on met en oeuvre les étapes suivantes :

a) On acquiert des signaux de mesure dudit capteur LiDAR pour chaque point de mesure dudit au moins un plan de mesure ;
b) On détermine la direction moyenne du vent et la vitesse moyenne du vent dans ledit au moins un plan de mesure au moyen d'une reconstruction du vent à partir desdits signaux de mesure ;
c) On construit dans ledit au moins un plan de mesure une droite de projection perpendiculaire à ladite direction du vent déterminée ;
d) On détermine un décalage temporel entre chaque point de mesure dudit au moins un plan de mesure et ladite droite de projection construite, au moyen de ladite vitesse moyenne du vent déterminée ;
e) Pour chaque point de mesure dudit au moins un plan de mesure, on détermine un signal de mesure corrigé, ledit signal de mesure corrigé correspondant au signal de mesure à un instant précédant l'instant considéré réduit d'une durée correspondant audit décalage temporel ; et
f) On détermine lesdites composantes de la vitesse du vent dans ledit au moins un plan de mesure au moyen desdits signaux de mesure corrigés.

Selon un mode de réalisation, on construit ladite droite de projection par une droite perpendiculaire à ladite direction du vent qui passe par le barycentre desdits points de mesure dudit au moins un plan de mesure, ou qui passe par un point de mesure dudit au moins un plan de mesure.

Avantageusement, on construit ladite droite de projection par une droite perpendiculaire à ladite direction du vent qui passe par le point de mesure dudit au moins plan de mesure ayant la mesure la plus récente.

Conformément à une mise en oeuvre, ladite reconstruction du vent prend en compte une hypothèse d'uniformité du vent dans ledit au moins un plan de mesure.

Selon un aspect, on détermine ledit décalage temporel $\delta t$ du point de mesure i par la formule :

$$\delta t_i = \frac{x_i \cos \Psi - y_i \sin \Psi}{\bar{v}}$$

avec $x_i$ et $y_i$ les coordonnées dudit point de mesure i dans le repère associé audit au moins plan de mesure, $\bar{v}$ ladite vitesse moyenne du vent déterminée, et $\Psi$ l'angle formé entre l'axe y dudit au moins un plan de mesure et ladite droite de projection.

Selon une caractéristique, on détermine ledit signal de mesure corrigé par interpolation desdits signaux de mesure antérieurs et postérieurs audit point de mesure considéré.

De manière avantageuse, on détermine lesdites composantes de la vitesse du vent au moyen de l'équation :

$$\begin{pmatrix} w_x(t) \\ w_y(t) \\ w_z(t) \end{pmatrix} = L_1^{N^+} \begin{pmatrix} m_1(t - \delta t_1) \\ m_2(t - \delta t_2) \\ \vdots \\ m_N(t - \delta t_N) \end{pmatrix}$$

avec $w_x$, $w_y$, $w_z$ les composantes de la vitesse du vent, $m_1$, $m_2$, ..., $m_N$ les signaux de mesure des points de mesure 1 à N, $\delta t$ ledit décalage temporel des points de mesure 1 à N, et $L_1^{N^+}$ une matrice de reconstruction géométrique des composantes de la vitesse du vent.

Conformément à un mode de réalisation, on détermine ladite direction moyenne du vent et ladite vitesse moyenne du vent pour une durée fixée ou pour une fenêtre de temps glissante, de préférence ladite durée fixée ou ladite fenêtre de temps glissante est comprise entre 1 min et 1 h, et préférentiellement entre 5 min et 30 min.

Selon une mise en oeuvre, on détermine ladite vitesse moyenne du vent dans ledit au moins un plan de mesure au moyen d'une hypothèse de turbulence figée et en considérant nulle la composante verticale de la vitesse du vent.

D'autres caractéristiques et avantages du procédé selon l'invention, apparaîtront à la lecture de la description ci-après d'exemples non limitatifs de réalisations, en se référant aux figures annexées et décrites ci-après.

## Liste des figures

La figure 1, déjà décrite, illustre un capteur LiDAR posé pour un procédé de détermination des composantes de la vitesse du vent.

La figure 2, déjà décrite, illustre un plan de mesure d'un capteur LiDAR posé.

La figure 3 illustre les étapes du procédé selon un mode de réalisation de l'invention.

La figure 4 illustre le décalage des points de mesure d'un plan de mesure sur la droite de projection selon un premier mode de réalisation de l'invention.

La figure 5 illustre le décalage des points de mesure d'un plan de mesure sur la droite de projection selon un deuxième mode de réalisation de l'invention.

La figure 6 illustre un paramétrage géométrique des faisceaux d'un capteur LiDAR pour un plan de mesure.

La figure 7 illustre un plan de mesure d'un capteur LiDAR avec neuf faisceaux pour un exemple.

La figure 8 illustre des mesures radiales de vitesse des faisceaux 5 et 7 de l'exemple de la figure 7 utilisés pour un procédé selon l'art antérieur et pour le procédé selon un mode de réalisation de l'invention.

## Description des modes de réalisation

La présente invention concerne un procédé de détermination des composantes de la vitesse du vent au moyen d'un capteur LiDAR. On appelle composantes de la vitesse du vent, les projections de la vitesse du vent dans un repère fixe, notamment dans un repère orthonormé.

Pour l'invention, le capteur LiDAR est dirigé sensiblement verticalement, en d'autres termes, la mesure est dirigée selon un axe sensiblement vertical. Par exemple, le capteur LiDAR peut être posé sur le sol et orienté verticalement. Selon l'invention, le capteur LiDAR permet de mesurer la vitesse du vent sur au moins un plan de mesure. Au vu de l'orientation du capteur LiDAR, chaque plan de mesure est sensiblement horizontal. Il existe plusieurs types de capteur LiDAR, par exemple les capteurs LiDAR scannés, LiDAR continus ou LiDAR pulsés. Dans le cadre de l'invention, on utilise de préférence un LiDAR pulsé. Cependant, les autres technologies de LiDAR peuvent être utilisées tout en restant dans le cadre de l'invention.

Le capteur LiDAR permet une mesure en continu. Par conséquent, l'utilisation d'un tel capteur, permet une détermination en continu de signaux de mesure. De plus, le capteur LiDAR est facilement déplaçable d'un site à un autre. Par exemple, le taux d'échantillonnage du capteur LiDAR peut être compris entre 0.1 et 5Hz (voire plus dans le futur), et peut valoir 1 Hz. De plus, le capteur LiDAR permet d'obtenir des informations relatives en plusieurs plans de mesure à plusieurs hauteurs. Par conséquent, le capteur LiDAR peut être également utilisé pour la détermination des composantes de vitesse du vent à plusieurs hauteurs, ce qui peut servir notamment à la détermination de la variation de la vitesse du vent en fonction de la hauteur.

Le capteur LiDAR mis en oeuvre par le procédé selon l'invention peut, par exemple, être conforme au capteur LiDAR représenté en figure 1, le but du procédé selon l'invention étant de déterminer les composantes Wx, Wy et Wz de la vitesse du vent respectivement sur les axes x, y et z.

De manière non limitative, le procédé selon l'invention fonctionne avec un capteur LiDAR comportant un nombre quelconque de faisceaux.

Le procédé selon l'invention comprend les étapes suivantes :

1- acquisition des signaux de mesure

2- détermination de la direction moyenne et de la vitesse moyenne du vent

3- construction d'une droite de projection

4- détermination du décalage temporel

5- détermination du signal de mesure corrigé

6- détermination des composantes de la vitesse du vent

Ces étapes seront détaillées dans la suite de la description. Les étapes 2 à 6 peuvent être mises en oeuvre par des moyens informatiques, notamment un ordinateur. Les étapes 2 à 6 peuvent être mises en oeuvre hors ligne après l'étape 1.

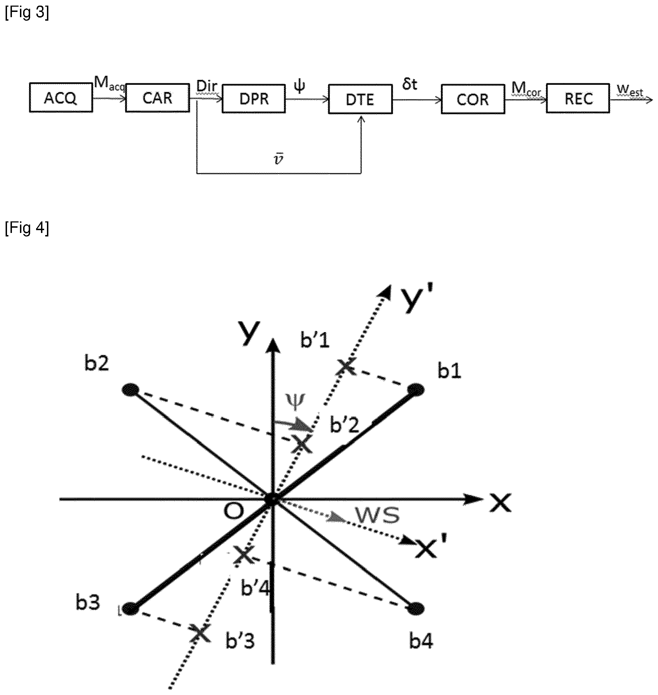

La figure 3 illustre, schématiquement et de manière non limitative les étapes du procédé selon un mode de réalisation de l'invention. Dans un premier temps, on acquiert ACQ les signaux de mesure $M_{acq}$ du capteur LiDAR dans au moins un plan de mesure. Ensuite, on utilise les signaux de mesure $M_{acq}$ pour déterminer CAR deux caractéristiques du vent pour le plan de mesure : la direction moyenne du vent Dir et la vitesse moyenne du vent $\bar{v}$. La direction moyenne du vent Dir est alors utilisée pour construire la droite de projection DPR qui peut être définie par son angle $\psi$. Cet angle $\psi$ ainsi que la vitesse moyenne du vent $\bar{v}$ permettent de déterminer DTE le décalage temporel $\delta t$ entre les points de mesure et la droite de projection. Avec le décalage temporel $\delta t$, on détermine COR le signal de mesure corrigé $M_{cor}$, qui est mis en oeuvre dans une reconstruction de la vitesse du vent REC de manière à déterminer les composantes de la vitesse du vent $W_{est}$ dans le plan de mesure.

## 1- Acquisition des signaux de mesure

Lors de cette étape, on acquiert les signaux de mesure du capteur LiDAR pour au moins un plan de mesure. En d'autres termes, pour chaque point de mesure d'au moins un plan de mesure on acquiert le signal de mesure issu du capteur LiDAR. Avantageusement, ces signaux de mesures peuvent être enregistrés, notamment au sein d'une mémoire informatique pour pouvoir être traités par des moyens informatiques dans les étapes suivantes.

Afin de déterminer les composantes de la vitesse du vent en plusieurs plans de mesure, on peut réaliser cette étape pour plusieurs plans de mesure. Dans ce cas, on peut mettre en oeuvre les étapes suivantes pour chaque plan de mesure.

De manière avantageuse, l'acquisition des signaux de mesure peut être réalisée sur un temps long, par exemple pour une durée pouvant varier de plusieurs jours et aller jusqu'à une année, voire plus.

## 2- Détermination de la direction moyenne et de la vitesse moyenne du vent

Lors de cette étape, on détermine, pour chaque plan de mesure considéré, la direction moyenne et la vitesse moyenne du vent, à partir des signaux de mesure acquis à l'étape 1. Pour cette étape, on peut mette en oeuvre une reconstruction du vent qui permet une approximation de la direction moyenne et de la vitesse moyenne du vent.

Selon un mode de réalisation de l'invention, on peut reconstruire le vent au moyen d'une reconstruction géométrique.

Selon un aspect de l'invention, pour cette reconstruction du vent, on peut prendre une hypothèse d'uniformité du vent dans le plan de mesure considéré, de manière à simplifier cette étape.

De manière avantageuse, on peut déterminer la direction moyenne du vent et la vitesse moyenne du vent pour une durée fixée ou pour une fenêtre de temps glissante, de préférence la durée fixée ou la fenêtre de temps glissante est comprise entre 1 min et 1 h, et préférentiellement entre 5 min et 30 min, et peut valoir par exemple 10 min. En effet, ces gammes de temps permettent d'avoir des caractéristiques représentatives du vent pour la mise en oeuvre des étapes suivantes.

De manière avantageuse, on peut déterminer la vitesse moyenne du vent dans le plan de mesure considéré au moyen d'une hypothèse de turbulence figée et en considérant nulle la composante verticale de la vitesse du vent.

Conformément à un mode de réalisation de l'invention, la reconstruction géométrique des composantes de la vitesse du vent peut mettre en oeuvre une opération pseudo-inverse « Moore-Penrose » appliquée aux signaux de mesure. Cette reconstruction géométrique à ce stade permet une approximation des composantes de la vitesse du vent, qui diffère de la détermination des composantes de la vitesse du vent de l'étape 6.

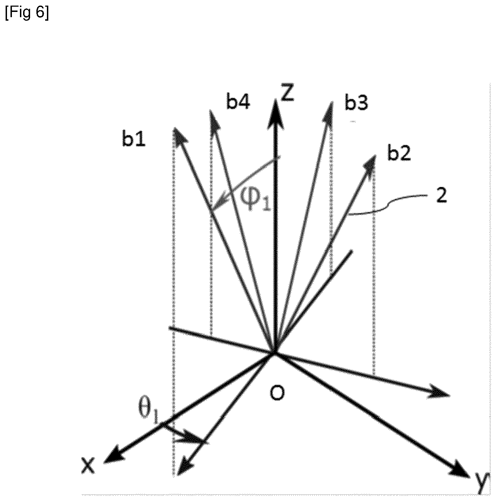

La figure 6 illustre, schématiquement et de manière non limitative, un paramétrage géométrique des signaux de mesure d'un capteur LiDAR (non représenté). Sur cette figure, quatre faisceaux 2 d'un capteur LiDAR sont représentés. Sur cette figure est également représenté le repère x, y, z de centre O, lié au capteur LiDAR. Le centre O correspond au capteur LIDAR, l'axe z la direction verticale, et les axes x et y formant un plan horizontal (défini de la même manière que pour la figure 1). Chaque faisceau 2 est orienté selon un axe de mesure représenté par un vecteur $Ob_i$, i variant de 1 à 4 pour représenter les 4 faisceaux, et bi représentant les points de mesure du plan de mesure considéré. Chaque vecteur $Ob_i$ est orienté par rapport au repère x, y, z au moyen des angles $\theta_i$ et $\varphi_i$ L'angle $\theta_i$ est défini dans le plan (x, y) par rapport à l'axe x. L'angle $\varphi_i$ est défini par rapport à l'axe z.

Au moyen des projections géométriques, on peut écrire l'équation suivante :

$$m_i(t) = (\sin(\varphi_i)\cos(\theta_i) \quad \sin(\varphi_i)\sin(\theta_i) \quad \cos(\varphi_i)) \begin{pmatrix} w_x(t) \\ w_y(t) \\ w_z(t) \end{pmatrix} = L_i \boldsymbol{w}(t)$$

Avec 1, ..., i, ..., n les points de mesures d'un plan de mesure, m1,..., mi, ..., mn les signaux de mesure du plan de mesure, Wx, Wy, Wz les composantes de la vitesse du vent, $L_i$ une matrice de reconstruction géométrique dépendantes dans angles $\theta_i$ et $\varphi_i$.

Au moyen de l'opération pseudo-inverse « Moore-Penrose », on peut donc obtenir les composantes de la vitesse du vent estimées dans le plan de mesure au moyen des signaux de mesure :

$$\boldsymbol{w}(t) = \begin{pmatrix} w_x(t) \\ w_y(t) \\ w_z(t) \end{pmatrix} = L_1^{N^+} \begin{pmatrix} m_1(t) \\ m_2(t) \\ \vdots \\ m_N(t) \end{pmatrix}$$

Avec $L_1^N = \begin{pmatrix} \sin(\varphi_1)\cos(\theta_1) & \sin(\varphi_1)\sin(\theta_1) & \cos(\varphi_1) \\ \sin(\varphi_2)\cos(\theta_2) & \sin(\varphi_2)\sin(\theta_2) & \cos(\varphi_2) \\ \vdots & \vdots & \vdots \\ \sin(\varphi_N)\cos(\theta_N) & \sin(\varphi_N)\sin(\theta_N) & \cos(\varphi_N) \end{pmatrix}$ et, pour une matrice L, l'exposant « + » signifie :

$$L^+ = L^T(LL^T)^{-1}$$

Conformément à une mise en oeuvre de l'invention, cette étape peut comprendre une étape de filtrage de la vitesse estimée, notamment pour limiter les valeurs aberrantes dans un but de rendre le procédé plus fiable et robuste.

Selon un mode de réalisation, on peut mettre en oeuvre ce filtrage au moyen d'un filtre passe-bas d'ordre un afin de restituer une représentation continue et réaliste de l'état de vent mesuré. Il peut s'agir d'un filtre à constante de temps variable. Plus la dernière valeur valide passée au filtre d'ordre un est ancienne, plus la constante de temps du filtre diminue (en d'autres termes le poids de l'état mémorisé dans le filtre est de plus en plus faible par rapport au poids de la prochaine valeur valide). Par ce mode de réalisation, on dérive une valeur instantanée, basse fréquence, débruitée et réaliste de l'état de vent contenu dans les mesures radiales.

Une fois les composantes de la vitesse du vent approximée par cette méthode, on détermine la direction moyenne du vent dans le plan de mesure considéré, et la vitesse moyenne du vent dans le plan de mesure considéré.

### 3- construction d'une droite de projection

Lors de cette étape, on construit dans chaque plan de mesure considéré, une droite de projection perpendiculaire à la direction moyenne du vent déterminée à l'étape précédente. Ainsi, on construit une droite de projection qui est orthogonale à la direction moyenne du vent. La droite de projection est dans le plan de mesure horizontal.

Selon un mode de réalisation de l'invention, on peut construire une droite de projection qui passe par le barycentre des points de mesure. Ce mode de réalisation permet d'avoir une droite de projection avec un point fixe au cours du temps (c'est-à-dire invariant dans le temps).

La figure 4 illustre, schématiquement et de manière non limitative, la construction de cette droite de projection selon un premier mode de réalisation. La figure 4 est une vue d'un plan de mesure horizontal, défini par les axes x et y. Dans ce plan de mesure, quatre points de mesure (b1, b2, b3, b4) sont représentés. Le barycentre de ces points de mesure est le point O, qui correspond pour cet exemple au centre du repère x, y, dans lequel se trouve le capteur LiDAR (non représenté). Sur cette figure, est également illustré le vecteur de la vitesse du vent WS ainsi que sa direction d'axe x'. On construit, par conséquent, la droite de projection y', qui passe par le point O, et qui est perpendiculaire à l'axe x'. Les autres éléments de la figure 4 sont détaillés dans la suite de la description.

En variante, on peut construire une droite de projection, qui passe par un point de mesure. De préférence, on peut construire une droite de projection, qui passe par le point de mesure, pour lequel la mesure est la plus récente. En effet, la mesure d'un capteur LiDAR étant réalisée, faisceau par faisceau, avec un taux d'échantillonnage, les mesures ne sont pas réalisés au même moment pour tous les points de mesure. Par conséquent, il existe un point pour lequel la mesure est plus récente que les autres points. Cette variante permet d'avoir une mesure non déphasée, c'est-à-dire avec un décalage temporel nul (cf. étapes suivantes). La prise en compte de la mesure la plus récente permet d'augmenter la précision du procédé selon l'invention.

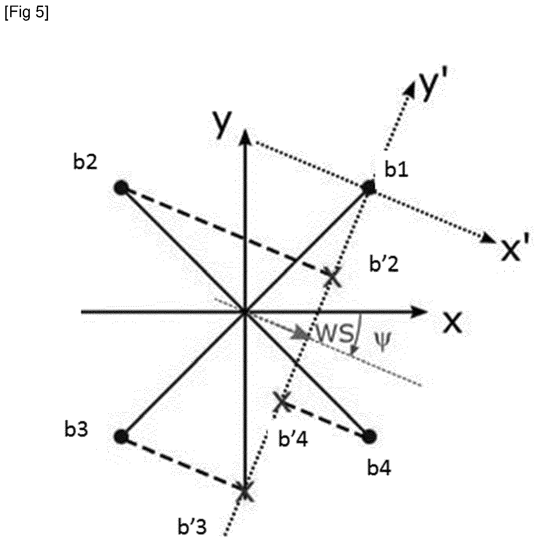

La figure 5 illustre, schématiquement et de manière non limitative, la construction de cette droite de projection selon un deuxième mode de réalisation. La figure 5 est une vue d'un plan de mesure horizontal, défini par les axes x et y. Dans ce plan de mesure, quatre points de mesure (b1, b2, b3, b4) sont représentés. Le barycentre de ces points de mesure est le point O, qui correspond pour cet exemple au centre du repère x, y, dans lequel se trouve le capteur LiDAR (non représenté). Sur cette figure, est également illustré le vecteur de la vitesse du vent WS. Pour cette figure, on considère que le point de mesure b1 est le point pour lequel la mesure est la plus récente. On construit, dans un premier temps, un axe x' parallèle à la vitesse du vent WS et passant par le point de mesure b1, et dans un deuxième temps, on construit la droite de projection y', qui passe par le point de mesure b1, et qui est perpendiculaire à l'axe x'. Les autres éléments de la figure 5 sont détaillés dans la suite de la description.

### 4- détermination du décalage temporel

Lors de cette étape, on détermine, au sein de chaque plan de mesure considéré, un décalage temporel entre chaque point de mesure et la droite de projection construite à l'étape précédente, et au moyen de ladite vitesse moyenne du vent déterminée à l'étape 2. Le décalage temporel est une durée, qui correspond à la durée prise par une masse d'air pour parcourir la distance entre le point de mesure et la droite de projection, en raison du vent. De manière imagée, cette étape consiste à projeter chaque point de mesure sur la droite de projection, et à déterminer le décalage temporel entre chaque point de mesure et sa projection sur la droite de projection. Il s'agit d'une projection orthogonale dans le plan de mesure, et par conséquent la projection s'obtient par l'intersection de la droite de projection avec une droite parallèle à la direction du vent passant par le point de mesure. Cette étape revient à exprimer la position des points de mesure sur la droite de projection.

Pour le premier mode de réalisation de la figure 4, dans un premier temps on projette les points de mesure (b1, b2, b3, b4) sur la droite de projection y'. On obtient ainsi les points projetés (b1', b2', b3', b4'). Ensuite, on détermine le temps parcouru par le vent pour chaque distance : la distance entre les points b1 et b1', la distance entre les points b2 et b2', la distance entre les points b3 et b3', et la distance entre les points b4 et b4'. Ces temps parcourus correspondent au décalage temporel.

Pour le deuxième mode de réalisation de la figure 5, dans un premier temps on projette les points de mesure (b1, b2, b3, b4) sur la droite de projection y'. On obtient ainsi les points projetés (b1, b2', b3', b4'). Ensuite, on détermine le temps parcouru par le vent pour chaque distance : la distance entre les points b2 et b2', la distance entre les points b3 et b3', et la distance entre les points b4 et b4'. Ces temps parcourus correspondent au décalage temporel. Etant donné que le point de mesure b1 appartient à la droite de projection, le point b1 est sa propre projection, et par conséquent le décalage temporel pour ce point est nul.

Conformément à une mise en oeuvre de l'invention, on peut déterminer le décalage temporel δt du point de mesure i par la formule :

$$\delta t_i = \frac{x_i \cos \Psi - y_i \sin \Psi}{\bar{v}}$$

avec $x_i$ et $y_i$ les coordonnées du point de mesure i dans le repère associé au plan de mesure considéré, $\bar{v}$ la vitesse moyenne du vent déterminée à l'étape 2, et $\Psi$ l'angle formé entre l'axe y du plan de mesure et la droite de projection (qui correspond aussi à l'angle formé entre la direction du vecteur de la vitesse du vent WS par rapport à l'axe). Cet angle $\Psi$ est illustré sur les figures 4 et 5.

De préférence, le décalage temporel est positif pour les points de mesure situés en amont de la droite de projection, et le décalage temporel est négatif pour les points de mesure situés en aval de la droite de projection. L'amont et l'aval étant défini en fonction de la direction moyenne du vent.

5- détermination du signal de mesure corrigé

Lors de cette étape, dans chaque plan de mesure considéré, pour chaque point de mesure, on détermine un signal de mesure corrigé, le signal de mesure corrigé correspondant au signal de mesure à un instant considéré réduit d'une durée correspondant audit décalage temporel déterminé à l'étape précédente (pour rappel le décalage temporel peut être négatif ou positif). En d'autres termes, on détermine les mesures qui seraient réalisées sur les points de mesure projetés sur la droite de projection. Pour cela, on prend en compte les mesures réelles aux points de mesure, et les décalages temporels déterminés à l'étape précédente.

La mesure corrigée peut alors s'écrire :

$$m_i'(t) = m_i(t - \delta t_i)$$

Avec i les points de mesure, $m_i$ les mesures acquises au point de mesure i, $m_i'$ la mesure corrigée au point de mesure i, et $\delta t_i$ le décalage temporel du point de mesure i. Etant donné que le décalage temporel peut être négatif ou positif, l'instant $t - \delta t_i$ peut être inférieur à l'instant t (c'est-à-dire antérieur à l'instant t) ou supérieur à l'instant t (c'est-à-dire postérieur à l'instant t). En effet, cette formule est permise notamment par l'hypothèse de turbulence figée de Taylor, qui indique que l'advection apportée par les circulations turbulentes elles-mêmes est faible, et que, par conséquent, l'advection d'un champ de turbulence au-delà d'un point fixe peut être considéré comme entièrement due au débit moyen. En d'autres termes, la totalité de la masse d'air, incluant les turbulences, se déplace à la vitesse moyenne du champ de vent.

Selon un mode de réalisation de l'invention, lorsque, à l'instant $t - \delta t$ aucune mesure réelle acquise n'est disponible, alors on peut mettre en oeuvre une interpolation des mesures antérieures et postérieures du point de mesure considéré pour estimer la mesure corrigée. Toute méthode d'interpolation peut être mise en oeuvre, par exemple par une moyenne, une moyenne pondérée, etc.

6- détermination des composantes de la vitesse du vent

Lors de cette étape, dans chaque plan de mesure considéré, on détermine les composantes de la vitesse du vent, au moyen des signaux de mesure corrigés déterminés à l'étape précédente. La détermination des composantes de la vitesse du vent à partir des mesures corrigées permet de diminuer la dimension de l'hypothèse d'homogénéité du champ de vent de deux dimensions à une seule dimension (celle de la droite de projection) par le biais de la prise en compte de la cohérence temporelle des mesures du capteur LiDAR.

En effet, par exemple, pour un capteur LiDAR avec quatre faisceaux tel qu'illustré en figures 1 et 2, pour un plan de mesure situé à 150m du capteur LiDAR, et pour une ouverture des faisceaux de mesure de 28°, la surface du carré limité par les points de mesure vaut 12700 m2, alors que la dimension du segment de la droite de projection obtenue par le procédé selon l'invention (le segment de droite reliant toutes les projections des points de mesure) lorsque la direction du vent forme un angle de 45° par rapport à l'axe x, est de 160 m.

Selon un mode de réalisation, on peut mettre en oeuvre une méthode de reconstruction du vent.

De manière avantageuse, on peut déterminer les composantes de la vitesse du vent au moyen de l'équation :

$$\begin{pmatrix} w_x(t) \\ w_y(t) \\ w_z(t) \end{pmatrix} = L_1^{N+} \begin{pmatrix} m_1(t - \delta t_1) \\ m_2(t - \delta t_2) \\ \vdots \\ m_N(t - \delta t_N) \end{pmatrix}$$

avec $w_x$, $w_y$, $w_z$ les composantes de la vitesse du vent, $m_1$, $m_2$, ..., $m_N$ les signaux de mesure des points de mesure 1 à N, $\delta t$ le décalage temporel des points de mesure 1 à N, et $L_1^{N+}$ une matrice de reconstruction géométrique des composantes de la vitesse du vent.

Selon une réalisation préférée la matrice de reconstruction géométrique des composantes de la vitesse du vent peut être identique que celle utilisée dans le mode de réalisation de l'étape 2. Ainsi, on peut écrire :

$$L_1^N = \begin{pmatrix} \sin(\varphi_1)\cos(\theta_1) & \sin(\varphi_1)\sin(\theta_1) & \cos(\varphi_1) \\ \sin(\varphi_2)\cos(\theta_2) & \sin(\varphi_2)\sin(\theta_2) & \cos(\varphi_2) \\ \vdots & \vdots & \vdots \\ \sin(\varphi_N)\cos(\theta_N) & \sin(\varphi_N)\sin(\theta_N) & \cos(\varphi_N) \end{pmatrix}$$

et pour une matrice L, l'exposant « + » signifie :

$$L^+ = L^T(LL^T)^{-1}$$

En outre, la présente invention concerne un procédé d'installation d'une éolienne, dans lequel on met en oeuvre les étapes suivantes :

- On détermine les composantes de la vitesse du vent au moyen du procédé selon l'une quelconque des variantes ou des combinaisons de variantes précédemment décrites, en au moins un site (un emplacement),
- On installe une éolienne sur le site en fonction des composantes de la vitesse du vent.

Lors de l'étape d'installation, on peut déterminer l'éolienne installée en termes de dimensions, de classe, sa structure, on peut également déterminer son orientation, et son contrôle en fonction des composantes de la vitesse du vent.

Conformément à une mise en oeuvre de l'invention, on peut répéter la première étape sur plusieurs sites. Puis, on détermine le site le plus propice à l'installation d'une éolienne en fonction des composantes de la vitesse du vent. Il peut s'agir notamment du site sur lequel la vitesse du vent est comprise dans une plage de fonctionnement adaptée à la récupération d'énergie par une éolienne.

**Exemple comparatif**

Les caractéristiques et avantages du procédé selon l'invention apparaîtront plus clairement à la lecture de l'exemple d'application ci-après.

L'exemple concerne la simulation CFD (de l'anglais « Computational Fluid Dynamics » pouvant être traduit par dynamique des fluides par la résolution numérique) de signaux de mesures d'un capteur LiDAR posé et orienté verticalement disposant de neuf faisceaux. Pour cette simulation, on génère 600s de signaux de mesure de vent. Une fois les signaux de mesure de vent générés, on modélise le capteur LiDAR avec projection sur faisceaux afin d'obtenir les mesures radiales. Afin d'observer le phasage des signaux temporels, on neutralise les composantes latérales et verticales de la vitesse du vent.

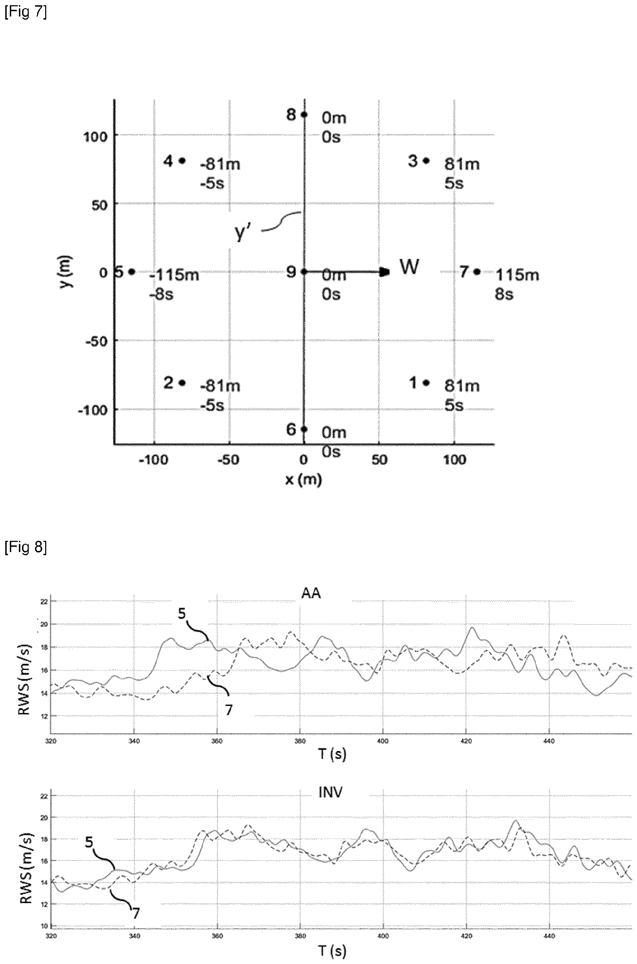

La figure 7 illustre, schématiquement et de manière non limitative, un plan de mesure d'un capteur LiDAR disposant de neuf faisceaux, le plan de mesure étant situé à 130 m du sol. Sur cette figure, on indique la position des points de mesures numérotés de 1 à 9, et l'orientation du vent W déterminé ici sur 600s (pour cet exemple la direction du vent W est parallèle à l'axe x), la droite de projection y' sur laquelle sont projetées les mesures (pour cet exemple, la droite de projection y' est parallèle à l'axe y). Pour chaque point de mesure, on indique deux valeurs : la distance par rapport à la droite de projection en m, et le décalage temporel en s.

La figure 8 représente des courbes de la vitesse radiale du vent RWS en m/s en fonction du temps T en s, pour les points de mesure 5 et 7, qui sont les points de mesure les plus éloignés de la droite de projection. La figure du haut représente la vitesse radiale du vent en prenant compte le signal de mesure directement acquis, selon un procédé selon l'art antérieur AA pour les points de mesure 5 et 7. Ces points étant espacés de 230 m, les mesures pour ces deux points ne sont pas identiques, et certaines variations du point 7 résultent d'un décalage dans le temps des variations des mesures du point 5, mais toutes les variations observées au point de mesure 7 ne peuvent pas se déduire directement des variations observées au point de mesure 5. Par conséquent, si on applique directement la méthode selon l'art antérieur, une incohérence temporelle est présente, ce qui implique une imprécision de la détermination des composantes de la vitesse du vent. La figure du bas représente la vitesse radiale du vent en prenant compte le signal de mesure corrigé, selon le procédé selon l'invention, pour les points de mesure 5 et 7. On remarque que le procédé selon l'invention permet une bonne synchronisation temporelle des signaux de mesure : les courbes sont presque superposées. Ainsi grâce à cette synchronisation, la détermination des composantes de la vitesse du vent peuvent être plus précises et plus fiables.

**Revendications**

1. Procédé de détermination des composantes de la vitesse du vent au moyen d'un capteur LiDAR (1), ledit capteur LiDAR (1) étant orienté sensiblement verticalement pour réaliser les mesures dans au moins un plan de mesure (PM) sensiblement horizontal, chaque plan de mesure (PM) comportant au moins deux points de mesure (b1, b2, b3, b4), **caractérisé en ce qu'**on met en oeuvre les étapes suivantes :

   a) On acquiert (ACQ) des signaux de mesure dudit capteur LiDAR (1) pour chaque point de mesure (b1, b2, b3, b4) dudit au moins un plan de mesure (PM) ;
   b) On détermine la direction moyenne du vent (Dir) et la vitesse moyenne du vent ($\bar{v}$) dans ledit au moins un plan de mesure (PM) au moyen d'une reconstruction du vent à partir desdits signaux de mesure ;
   c) On construit dans ledit au moins un plan de mesure une droite de projection perpendiculaire à ladite direction du vent déterminée (Dir) ;
   d) On détermine un décalage temporel ($\delta t$) entre chaque point de mesure (b1, b2, b3, b4) dudit au moins un plan de mesure (PM) et ladite droite de projection construite, au moyen de ladite vitesse moyenne du vent ($\bar{v}$) déterminée ;
   e) Pour chaque point de mesure (b1, b2, b3, b4) dudit au moins un plan de mesure (PM), on détermine un signal de mesure corrigé, ledit signal de mesure corrigé correspondant au signal de mesure à un instant précédant l'instant considéré réduit d'une durée correspondant audit décalage temporel ($\delta t$) ; et
   f) On détermine lesdites composantes de la vitesse du vent dans ledit au moins un plan de mesure (PM) au moyen desdits signaux de mesure corrigés.

2. Procédé selon la revendication 1, dans lequel on construit ladite droite de projection par une droite perpendiculaire à ladite direction du vent (Dir) qui passe par le barycentre desdits points de mesure (b1, b2, b3, b4) dudit au moins un plan de mesure (PM), ou qui passe par un point de mesure (b1, b2, b3, b4) dudit au moins un plan de mesure (PM).

3. Procédé selon la revendication 2, dans lequel on construit ladite droite de projection par une droite perpendiculaire à ladite direction du vent (Dir) qui passe par le point de mesure (b1, b2, b3, b4) dudit au moins plan de mesure ayant la mesure la plus récente.

4. Procédé selon l'une des revendications précédentes, dans lequel ladite reconstruction du vent prend en compte une hypothèse d'uniformité du vent dans ledit au moins un plan de mesure.

5. Procédé selon l'une des revendications précédentes, dans lequel on détermine ledit décalage temporel $\delta t$ du point

$$\delta t_i = \frac{x_i \cos \Psi - y_i \sin \Psi}{\bar{v}}$$

de mesure i par la formule : avec $x_i$ et $y_i$ les coordonnées dudit point de mesure i dans le repère associé audit au moins plan de mesure, $\bar{v}$ ladite vitesse moyenne du vent déterminée, et $\Psi$ l'angle formé entre l'axe y dudit au moins un plan de mesure et ladite droite de projection.

6. Procédé selon l'une des revendications précédentes, dans lequel on détermine ledit signal de mesure corrigé par interpolation desdits signaux de mesure antérieurs et postérieurs audit point de mesure considéré.

7. Procédé selon l'une des revendications précédentes, dans lequel on détermine lesdites composantes de la vitesse

$$\begin{pmatrix} w_x(t) \\ w_y(t) \\ w_z(t) \end{pmatrix} = L_1^{N+} \begin{pmatrix} m_1(t - \delta t_1) \\ m_2(t - \delta t_2) \\ \vdots \\ m_N(t - \delta t_N) \end{pmatrix}$$

du vent au moyen de l'équation : avec $w_x$, $w_y$, $w_z$ les composantes de la vitesse du vent, $m_1$, $m_2$, ..., $m_N$ les signaux de mesure des points de mesure 1 à N, $\delta t$ ledit décalage temporel des points de mesure 1 à N, et $L_1^{N+}$ une matrice de reconstruction géométrique des composantes de la vitesse du vent.

8. Procédé selon l'une des revendications précédentes, dans lequel on détermine ladite direction moyenne du vent (Dir) et ladite vitesse moyenne du vent ($\overline{v}$) pour une durée fixée ou pour une fenêtre de temps glissante, de préférence ladite durée fixée ou ladite fenêtre de temps glissante est comprise entre 1 min et 1 h, et préférentiellement entre 5 min et 30 min.

9. Procédé selon l'une des revendications précédentes, dans lequel on détermine ladite vitesse moyenne du vent ($\overline{v}$) dans ledit au moins un plan de mesure au moyen d'une hypothèse de turbulence figée et en considérant nulle la composante verticale de la vitesse du vent.

**Patentansprüche**

1. Verfahren zur Bestimmung der Komponenten der Windgeschwindigkeit mittels eines LiDAR-Sensors (1), wobei der LiDAR-Sensor (1) im Wesentlichen senkrecht angeordnet ist, um die Messungen in mindestens einer im Wesentlichen horizontalen Messebene (PM) durchzuführen, wobei jede Messebene (PM) mindestens zwei Messpunkte (b1, b2, b3, b4) umfasst, **dadurch gekennzeichnet, dass** die folgenden Schritte umgesetzt werden:

   a) Erfassen (ACQ) von Messsignalen des LiDAR-Sensors (1) für jeden Messpunkt (b1, b2, b3, b4) der mindestens einen Messebene (PM);
   b) Bestimmen der mittleren Windrichtung (Dir) und der mittleren Windgeschwindigkeit ($\overline{v}$) in der mindestens einen Messebene (PM) mittels einer Rekonstruktion des Windes anhand der Messsignale;
   c) Konstruieren, in der mindestens einen Messebene, einer Projektionsgeraden, die zu der bestimmten Windrichtung (Dir) senkrecht ist;
   d) Bestimmen einer Zeitverschiebung ($\delta t$) zwischen jedem Messpunkt (b1, b2, b3, b4) der mindestens einen Messebene (PM) und der konstruierten Projektionsgeraden mittels der bestimmten mittleren Windgeschwindigkeit ($\overline{v}$);
   e) für jeden Messpunkt (b1, b2, b3, b4) der mindestens einen Messebene (PM), Bestimmen eines korrigierten Messsignals, wobei das korrigierte Messsignal dem Messsignal zu einem Zeitpunkt, der dem betrachteten Zeitpunkt vorausgeht, verringert um eine der Zeitverschiebung ($\delta t$) entsprechende Dauer entspricht; und
   f) Bestimmen der Komponenten der Windgeschwindigkeit in der mindestens einen Messebene (PM) mittels der korrigierten Messsignale.

2. Verfahren nach Anspruch 1, wobei die Projektionsgerade durch eine Gerade senkrecht zu der Windrichtung (Dir), die durch das Baryzentrum der Messpunkte (b1, b2, b3, b4) der mindestens einen Messebene verläuft oder die durch einen Messpunkt (b1, b2, b3, b4) der mindestens einen Messebene (PM) verläuft, konstruiert wird.

3. Verfahren nach Anspruch 2, wobei die Projektionsgerade durch eine Gerade senkrecht zu der Windrichtung (Dir), die durch den Messpunkt (b1, b2, b3, b4) der mindestens einen Messebene, der die neueste Messung aufweist, verläuft, konstruiert wird.

4. Verfahren nach einem der vorhergehenden Ansprüche, wobei die Rekonstruktion des Windes eine Hypothese einer Uniformität des Windes in der mindestens einen Messebene berücksichtigt.

5. Verfahren nach einem der vorhergehenden Ansprüche, wobei die zeitliche Verschiebung $\delta t$ des Messpunkts i durch

$$\delta t_i = \frac{x_i \cos \Psi - y_i \sin \Psi}{\overline{v}}$$

die folgende Formel bestimmt wird: wobei $x_i$ und $y_i$ die Koordinaten des Messpunkts i in dem mit der mindestens einen Messebene assoziierten Bezugssystem sind, $\overline{v}$ die bestimmte mittlere Windgeschwindigkeit ist und $\psi$ der Winkel ist, der zwischen der y-Achse der mindestens einen Messebene und der Projektionsgeraden gebildet wird.

**6.** Verfahren nach einem der vorhergehenden Ansprüche, wobei das korrigierte Messsignal durch Interpolation der Messsignale, die zeitlich vor und hinter dem betrachteten Messpunkt liegen, bestimmt wird.

**7.** Verfahren nach einem der vorhergehenden Ansprüche, wobei die Komponenten der Windgeschwindigkeit mittels der folgenden Gleichung bestimmt werden:

$$\begin{pmatrix} w_x(t) \\ w_y(t) \\ w_z(t) \end{pmatrix} = L_1^{N^+} \begin{pmatrix} m_1(t - \delta t_1) \\ m_2(t - \delta t_2) \\ \vdots \\ m_N(t - \delta t_N) \end{pmatrix}$$

wobei $w_x$, $w_y$, $w_z$ die Komponenten der Windgeschwindigkeit sind, $m_1$, $m_2$, ..., $m_N$ die Messsignale der Messpunkte 1 bis N sind, $\delta t$ die zeitliche Verschiebung der Messpunkte 1 bis N ist und $L_1^{N^+}$ eine Matrix zur geometrischen Rekonstruktion der Komponenten der Windgeschwindigkeit ist.

**8.** Verfahren nach einem der vorhergehenden Ansprüche, wobei die mittlere Windrichtung (Dir) und die mittlere Windgeschwindigkeit ($\overline{v}$) für eine festgelegte Dauer oder für ein gleitendes Zeitfenster bestimmt werden, wobei die festgelegte Dauer oder das gleitende Zeitfenster vorzugsweise zwischen 1 min und 1 h beträgt und bevorzugt zwischen 5 min und 30 min beträgt.

**9.** Verfahren nach einem der vorhergehenden Ansprüche, wobei die mittlere Windgeschwindigkeit ($\overline{v}$) in der mindestens einen Messebene mittels einer Hypothese einer eingefrorenen Turbulenz und unter der Annahme, dass die vertikale Komponente der Windgeschwindigkeit Null ist, bestimmt wird.

**Claims**

**1.** Method for determining wind speed components by way of a lidar sensor (1), said lidar sensor (1) being oriented substantially vertically in order to carry out the measurements in at least one substantially horizontal measurement plane (PM), each measurement plane (PM) comprising at least two measurement points (b1, b2, b3, b4), **characterized in that** the following steps are implemented:

a) acquiring (ACQ) measurement signals from said lidar sensor (1) for each measurement point (b1, b2, b3, b4) of said at least one measurement plane (PM);
b) determining the mean wind direction (Dir) and the mean wind speed ($\overline{v}$) in said at least one measurement plane (PM) by way of a reconstruction of the wind based on said measurement signals;
c) constructing a projection line perpendicular to said determined wind direction (Dir) in said at least one measurement plane;
d) determining a time offset ($\delta t$) between each measurement point (b1, b2, b3, b4) of said at least one measurement plane (PM) and said constructed projection line, by way of said determined mean wind speed ($\overline{v}$);
e) for each measurement point (b1, b2, b3, b4) of said at least one measurement plane (PM), determining a corrected measurement signal, said corrected measurement signal corresponding to the measurement signal at a time preceding the time under consideration minus a duration corresponding to said time offset ($\delta t$); and
f) determining said wind speed components in said at least one measurement plane (PM) by way of said corrected measurement signals.

**2.** Method according to Claim 1, wherein said projection line is constructed by a line perpendicular to said wind direction (Dir) that passes through the barycentre of said measurement points (b1, b2, b3, b4) of said at least one measurement plane (PM), or that passes through a measurement point (b1, b2, b3, b4) of said at least one measurement plane (PM).

**3.** Method according to Claim 2, wherein said projection line is constructed by a line perpendicular to said wind direction (Dir) that passes through the measurement point (b1, b2, b3, b4) of said at least one measurement plane having the most recent measurement.

4. Method according to one of the preceding claims, wherein said reconstruction of the wind takes into account a hypothesis of the wind being uniform in said at least one measurement plane.

5. Method according to one of the preceding claims, wherein said time offset $\delta t$ of the measurement point i is determined using the following formula:

$$\delta t_i = \frac{x_i \cos \Psi - y_i \sin \Psi}{\bar{v}}$$

where $x_i$ and $y_i$ are the coordinates of said measurement point i in the coordinate system associated with said at least one measurement plane, $\bar{v}$ is said determined mean wind speed, and $\psi$ is the angle formed between the y-axis of said at least one measurement plane and said projection line.

6. Method according to one of the preceding claims, wherein said corrected measurement signal is determined by interpolating said measurement signals prior to and subsequent to said measurement point in question.

7. Method according to one of the preceding claims, wherein said wind speed components are determined by way of the following equation:

$$\begin{pmatrix} w_x(t) \\ w_y(t) \\ w_z(t) \end{pmatrix} = L_1^{N+} \begin{pmatrix} m_1(t - \delta t_1) \\ m_2(t - \delta t_2) \\ \vdots \\ m_N(t - \delta t_N) \end{pmatrix}$$

where $w_x$, $w_y$, $w_z$ are the wind speed components, $m_1$, $m_2$, ..., $m_N$ are the measurement signals from the measurement points 1 to N, $\delta t$ is said time offset of the measurement points 1 to N, and $L_1^{N+}$ is a matrix for geometrically reconstructing the wind speed components.

8. Method according to one of the preceding claims, wherein said mean wind direction (Dir) and said mean wind speed ($\bar{v}$) are determined for a fixed duration or for a sliding time window, said fixed duration or said sliding time window preferably being between 1 min and 1 h, and preferentially between 5 min and 30 min.

9. Method according to one of the preceding claims, wherein said mean wind speed ($\bar{v}$) is determined in said at least one measurement plane by way of a fixed turbulence assumption, and considering the vertical component of the wind speed to be zero.

13

[Fig 1]

[Fig 2]

[Fig 3]

[Fig 4]

[Fig 5]

[Fig 6]

[Fig 7]

[Fig 8]

**RÉFÉRENCES CITÉES DANS LA DESCRIPTION**

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 3287810 A

- US 2019293836 A